Europäisches Patentamt

European Patent Office

Office européen des brevets

(11) Veröffentlichungsnummer: **0 020 923**
A1

# (12) EUROPÄISCHE PATENTANMELDUNG

(21) Anmeldenummer: **80102197.3**

(22) Anmeldetag: **24.04.80**

(51) Int. Cl.³: **B 60 R 3/00,** B 60 P 3/32

(30) Priorität: **28.06.79 DE 2926030**

(43) Veröffentlichungstag der Anmeldung: **07.01.81**
**Patentblatt 81/1**

(84) Benannte Vertragsstaaten: **AT BE CH DE FR GB IT LI LU NL SE**

(71) Anmelder: **Tripus-Kunststoffteile GmbH., Postfach 469, D-8870 Günzburg (DE)**

(72) Erfinder: **Blach, Hans, Am Hohen Rain 1, D-8871 Bubesheim (DE)**

(74) Vertreter: **Munk, Ludwig, Dipl.-Ing., Maximilianstrasse 71, D-8900 Augsburg (DE)**

(54) **Einstiegstufe für Wohnwagen.**

(57) An der Einstiegstufe mit mindestens einem ein Trittbrett (1) und einen nach untenweisenden, mit einer Standfläche (4) versehenen Stützfuss (2) aufweisenden Tritt (50) und mindestens einem nach obenweisenden, an einem wohnwagenseitig anzubringenden Beschlag (6) einhängbaren Haltearm (3), der trittbrettseitig an der dem Stützfuss (2) gegenüberliegenden Seite festgelegt ist, ist der Stützfuss (2) zur Bildung einer Doppel- bzw. Mehrfachstufe im Bereich seiner Standfläche (4) und im Bereich seiner an die Standfläche (4) sich anschliessenden senkrechten Wange (51) mit Befestigungselementen (55, 58 bzw. 14, 17a) versehen, an denen ein mit korrespondierenden Befestigungselementen (55, 57) versehener Stützfuss-Verlängerungssockel (53) bzw. das mit korrespondierenden Befestigungselementen (14, 17) versehene Trittbrett (1) eines weiteren, haltearmlosen Tritts (50) lösbar festlegbar sind.

1

Einstiegstufe für Wohnwagen

Die Erfindung betrifft eine Einstiegstufe für Wohnwagen mit mindestens einem ein Trittbrett und einen
nach unten weisenden, mit einer Standfläche versehenen Stützfuß aufweisenden Tritt und mindestens einem
nach oben weisenden, an einem wohnwagenseitig anzubringenden Beschlag einhängbaren Haltearm, der trittbrettseitig an der dem Stützfuß gegenüberliegenden
Seite festgelegt ist.

Anordnungen dieser in der EP O OO5 258 beschriebenen
Art haben sich im großen und ganzen bewährt. Es hat
sich jedoch gezeigt, daß manche Wohnwagen eine Einstieghöhe aufweisen, die bei Verwendung einer einstufigen Anordnung zu unzulässigen Stufenhöhen führen
würde.

Es ist daher die Aufgabe der vorliegenden Erfindung,
eine Einstiegstufe eingangs erwähnter Art mit einfachen und daher kostengünstigen Mitteln so zu verbessern, daß praktisch jede beliebige Einstieghöhe in
Stufenabstände zulässiger Höhe unterteilbar ist.

Die Lösung dieser Aufgabe gelingt erfindungsgemäß dadurch, daß der Stützfuß zur Bildung einer Doppel- bzw. Mehrfachstufe im Bereich seiner Standfläche und im Bereich seiner an die Standfläche sich anschließenden senkrechten Wange mit Befestigungselementen versehen ist, an denen ein mit korrespondierenden Befestigungselementen versehener Stützfuß-Verlängerungssockel bzw. das mit korrespondierenden Befestigungselementen versehene Trittbrett eines weiteren, haltearmlosen Tritts lösbar festlegbar sind.

Diese Maßnahmen gewährleisten ersichtlich eine hohe Standsicherheit sowie eine geringe Beanspruchung des Haltearms, was Unfallgefahren wirksam vorbeugt und somit eine zuverlässige Überbrückung praktisch jeder Einstieghöhe gewährleistet. In vorteilhafter Weise kann dabei die jeweils benötigte Doppel- oder Mehrfachstufe ausgehend von den Elementen einer Einfachstufe praktisch baukastenartig zusammengesetzt werden, was eine spezielle Anpassung an die individuellen Bedürfnisse ermöglicht. Dem kommt insbesondere eine Ausführungsform entgegen, bei welcher der Haltearm und der diesen aufnehmende Tritt, wie bereits vorgeschlagen, als separate Bauteile ausgeführt sind. In vorteilhafter Weise können dabei die trittbrettseitigen Befestigungselemente sowohl mit den haltearmseitigen als auch mit den im Bereich der vorderen, an die Standfläche sich anschließenden Wange des Stützfußes angeordneten Befestigungselementen korrespondieren. Diese Maßnahmen gewährleisten, daß man mit einer Form eines haltearmlosen Tritts auskommt, was eine rationelle Herstellung und damit eine günstige Preisgestaltung ermöglicht.

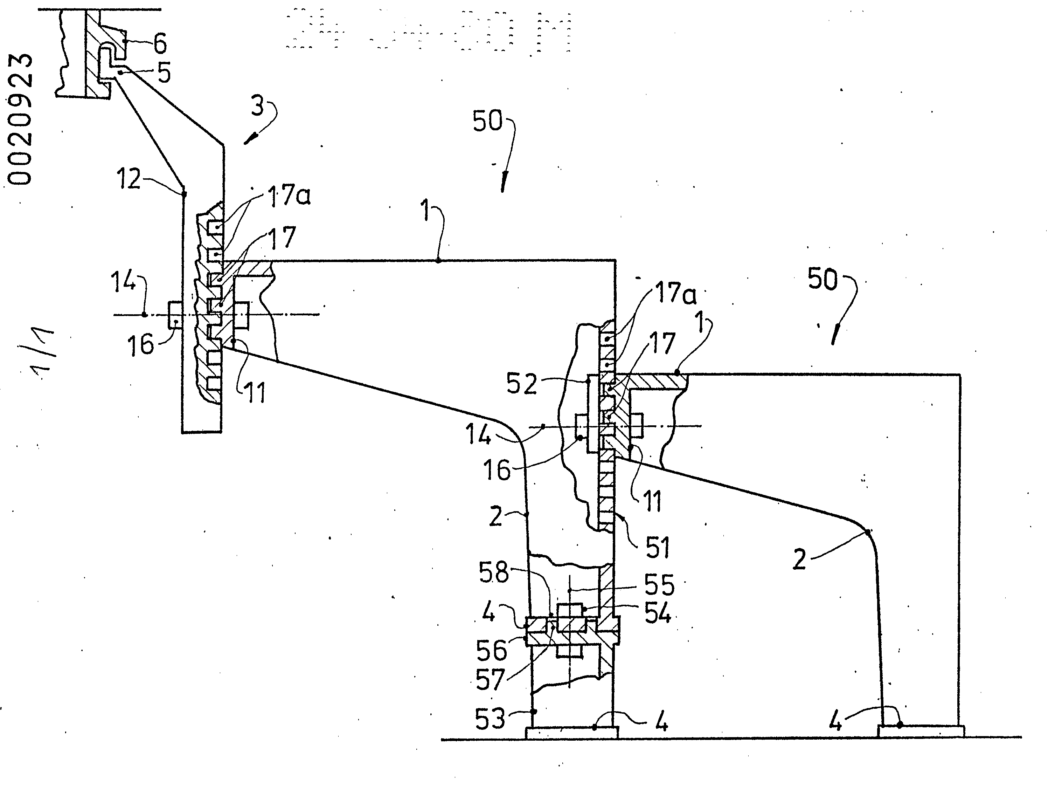

Weitere Vorteile und zweckmäßige Ausgestaltungen der übergeordneten Maßnahmen ergeben sich aus der nachstehenden Beschreibung eines Ausführungsbeispiels anhand der Zeichnung in Verbindung mit den Unteransprüchen.

Die Zeichnung zeigt eine Seitenansicht einer mehrstufigen Einstiegstufe in teilweise geschnittener, schematischer Darstellung.

Die in der Zeichnung dargestellte Einstiegstufe besteht aus zwei jeweils ein Trittbrett 1 und einen nach unten weisenden, mit einer Standfläche 4 versehenen Stützfuß 2 aufweisenden, als Ganzes mit 50 bezeichneten gleichen Tritten, die zur Bildung einer Doppelstufe aneinander festgelegt sind. Die aneinander festgelegten Tritte sind mit einam nach oben weisenden Haltearm 3, der mit einem an einem wohnwagenseitig anzubringenden, bei 6 angedeuteten Beschlag einrastbaren Klaue 5 versehen ist, wohnwagenseitig festlegbar. Der Haltearm 3 ist im dargestellten Ausführungsbeispiel als separates Bauteil ausgebildet, das mit Hilfe eines angeformten Verlängerungsschenkels 12 verstellbar an einer dem Stützfuß 2 gegenüberliegenden Randleiste 11 des Trittbretts 1 des oberen Tritts festlegbar ist. Der untere, haltearmlose Tritt ist mit seiner dem Stützfuß 2 gegenüberliegenden Randleiste 11 an der an die Standfläche 4 sich anschließenden, senkrechten, vorderen Wange 51 des benachbarten oberen Tritts festlegbar. Hierzu sind im Bereich der Randleiste 11 der Tritte 50 Befestigungselemente vorgesehen, welche mit im Bereich ihrer vorderen Wange 51 vorgesehenen Befestigungselementen bzw. im Bereich des Verlängerungsschenkels 12 des Haltearms 3 vorgesehenen Befestigungselementen korrespondieren.

Im dargestellten Ausführungsbeispiel sind zur Bildung von Befestigungselementen jeweils Rastprofilierungen mit vorspringenden Nocken 17 und diesen zugeordneten Ausnehmungen 17a vorgesehen, so daß sich in vorteilhafter Weise praktisch ein verzahnungsartiger Eingriff von Randleiste 11 und Verlängerungsschenkel 12 bzw. vorderer Wange 51 ergibt. Zur Bewerkstelligung eines sauberen Zusammenhalts sind im Bereich von Randleiste 11 sowie Verlängerungsschenkel 12 bzw. Vorderwange 51 seitlich neben den vorspringenden Nocken 17 bzw. den diesen zugeordneten Vertiefungen 17a angeordnete, korrespondierende, hier lediglich durch jeweils eine Mittellinie angedeutete Lochpaare 14 zur Aufnahme von durchgehenden, hier lediglich durch ihre Köpfe angedeuteten Verbindungsschrauben 16 vorgesehen. Die Rastprofilierung von Vorderwange 51 und Verlängerungsschenkel 12 umfaßt einen über die Höhe der jeweils benachbarten Randleiste 11 hinausgehenden Bereich. Ebenso sind die vordere Wange 51 und der Verlängerungsschenkel 12 mit seitlich neben ihrer Rastprofilierung angeordneten Lochreihen versehen, deren Teilung der Teilung der Rastprofilierung entspricht. Diese Maßnahmen gewährleisten in vorteilhafter Weise eine variable Einstellbarkeit der gewünschten Stufenabstände.

Die Vertiefungen 17a der im Bereich der vorderen Wange vorgesehenen Rastprofilierung können, wie die Zeichnung anschaulich erkennen läßt, einfach durch entsprechende Ausstanzungen gebildet werden, in welche die zugeordneten Nocken 17 des jeweils niedrigeren Tritts eingesteckt werden. Diese Maßnahme ermöglicht es in vorteilhafter Weise nicht nur die hier vorgesehene Rastprofilierung entsprechend den Verhältnissen des Einzelfalls zu verlängern, sofern dies etwa beim Umstieg auf einen neuen Wohnwagen erforderlich werden sollte, sondern ermöglicht es auch, die erfindungsgemäße Rastprofilierung überhaupt nachträglich anzubringen, was eine Umrüstung bereits schon ausgelieferter, einteiliger Wohnwagenstufen erlaube. Zur örtlichen Entlastung der Wange 51 im Bereich der Durchgangsschrauben 16 kann vorteilhaft ein hinterlegter, die Wandausnehmungen der Rastprofilierung abdeckender Bügel 52 vorgesehen sein.

Zur Entlastung des Haltearms 3 ist die die Unterlage nicht mehr erreichende Standfläche 4 des höher gesetzten Tritts durch einen bei 53 angedeuteten Verlängerungssockel unterlegt. Der Verlängerungssockel 53 kann einfach durch bei 54 angedeutete, durch korrespondierende Bohrungen 55 hindurchgreifende Verbindungsschrauben an der Standfläche 4 festgelegt sein. Im dargestellten Ausführungsbeispiel ist zur Bewerkstelligung einer einfachen Verdrehsicherung eine einen verzahnungsartigen Eingriff ergebende Rastprofilierung vorgesehen. Hierzu ist die obere Stirnwand 56 des Verlängerungsschenkels 53 mit zwei vorspringenden Nocken 57 versehen, welche in durchgehende Wandausnehmungen 58 der die Standfläche 4 bildenden Wandung einsteckbar sind. In Fällen dieser Art genügt in vorteilhafter Weise die Verwendung lediglich einer zentral angeordneten Verbindungsschraube. Der Verlängerungssockel 53 kann, wie im dargestellten Ausführungsbeispiel, einteilig ausgebildet sein. Die Höhe eines derartigen Verlängerungssockels ergibt sich praktisch aus der vorgegebenen Wohnwageneinstieghöhe. Es wäre aber auch ohne weiteres denkbar, den Verlängerungssockel 53 bausteinartig aus mehreren Teilen zusammenzusetzen. Hierbei sind die obere und die untere Stirnwandung der einzelnen Bauteile einfach mit entsprechenden Verbindungselementen, beispielsweise korrespondierenden Durchgangslöchern bzw. Rastprofilierungen zu versehen. Eine Fortbildung dieser Art hat den Vorteil, daß man praktisch mit einem Element jede beliebige Sockelhöhe herstellen kann, was sich insbesondere beim Bau von Mehrfachstufen vorteilhaft auswirken kann.

Die Tritte 50 der Verlängerungsschenkel 53 und der Haltearm 3 können vorteilhaft als Kunststoff-Spritzgußformlinge ausgebildet sein. Die Tritte 50 und ggf. der bzw. die Verlängerungssockel 53 sind dabei zweckmäßig zur Bewerkstelligung einer einfachen Zugänglichkeit der Verbindungsschrauben 16 bzw. 54 nach einer Seite hin, im dargestellten Ausführungsbeispiel zweckmäßig nach innen, wannenartig offen.

Patentansprüche

1) Einstiegstufe für Wohnwagen mit mindestens einem ein Trittbrett (1) und einen nach unten weisenden, mit einer Standfläche (4) versehenen Stützfuß (2) aufweisenden Tritt (50) und mindestens einem nach oben weisenden, an einem wohnwagenseitig anzubringenden Beschlag (6) einhängbaren Haltearm (3), der trittbrettseitig an der dem Stützfuß (2) gegenüberliegenden Seite festgelegt ist, dadurch gekennzeichnet, daß der Stützfuß (2) zur Bildung einer Doppel- bzw. Mehrfachstufe im Bereich seiner Standfläche (4) und im Bereich seiner an die Standfläche (4) sich anschließenden senkrechten Wange (51) mit Befestigungselementen (55, 58 bzw. 14, 17a) versehen ist, an denen ein mit korrespondierenden Befestigungselementen (55, 57) versehener Stützfuß-Verlängerungssockel (53) bzw. das mit korrespondierenden Befestigungselementen (14, 17) versehene Trittbrett (1) eines weiteren, haltearmlosen Tritts (50) lösbar festlegbar sind.

2) Einstiegstufe nach Anspruch 1 mit einem oder mehreren, mit Befestigungselementen versehenen, an einer benachbarten, mit korrespondierenden Befestigungselementen versehenen Randleiste (11) eines Trittbretts lösbar festlegbaren Haltearmen, dadurch gekennzeichnet, daß die trittbrettseitigen Befestigungselemente (14, 17) sowohl mit den haltearmseitigen als auch mit den im Bereich der vorderen Wange (51) angeordneten Befestigungselementen (14, 17a) korrespondieren.

3) Einstiegstufe nach wenigstens einem der vorhergehenden Ansprüche mit einer trittbrettseitig vorgesehenene Rastprofilierung, dadurch gekennzeichnet, daß die senkrechte Wange (51) mit den Erhebungen (17) der trittbrettseitigen Rastprofilierung zugeordneten Wandausnehmungen (17a) versehen ist, welche mittels eines durch korrespondierende Löcher (14) hindurchgesteckte Verbindungsschrauben (16) gehaltenen Bügels (52) abgedeckt sind.

4) Einstiegstufe nach wenigstens einem der vorhergehenden Ansprüche, dadurch gekennzeichnet, daß die senkrechte Wange (51) mit einer zumindest über einen größeren Bereich ihrer Höhe sich erstreckenden Reihe von Profilierungsausnehmungen (17a) bzw. Löchern (14) zur Aufnahme von Verbindungsschrauben (16) versehen ist.

5) Einstiegstufe nach wenigstens einem der vorhergehenden Ansprüche, dadurch gekennzeichnet, daß im Bereich der Standfläche (4) Ausnehmungen (58) vorgesehen sind, welche im Bereich der oberen Stirnwand (56) des Verlängerungssockels (53) vorgesehenen Nocken (57) zugeordnet sind.

6) Einstiegstufe nach wenigstens einem der vorherge-

3

henden Ansprüche, <u>dadurch gekennzeichnet, daß</u> der Verlängerungssockel (53) mehrteilig ausgebildet ist, wobei sämtliche Teile im Bereich ihrer unteren und ihrer oberen Stirnwandung mit korrespondierenden Befestigungselementen versehen sind.

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | US - A - 4 021 071 (T.W. NORMAN) <br> * Fig. 3 * <br> —— | |
| P,D,A | EP - A1 - 0 005 258 (TRIPUS-KUNSTSTOFF-TEILE) <br> * ganzes Dokument * <br> ———— | |

**KLASSIFIKATION DER ANMELDUNG (Int.Cl.3)**

B 60 R    3/00

B 60 P    3/32

**RECHERCHIERTE SACHGEBIETE (Int. Cl.3)**

B 60 P    3/00

B 60 R    3/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 05-08-1980 | BECKER |

EPA form 1503.1   06.78